# EUROPÄISCHE PATENTSCHRIFT

(11) **EP 2 670 155 B1**
(45) Veröffentlichungstag und Bekanntmachung des Hinweises auf die Patenterteilung: **21.06.2017**
(21) Anmeldenummer: 13169869.8
(22) Anmeldetag: 30.05.2013
(51) Int. Cl.: H04N 21/00, H04N 21/431, H04N 21/462, H04N 5/45, H04N 5/46

(54) **Hybrid-TV-Empfänger mit einer Videomischeinrichtung für eine Mehrbildwiedergabe zum zeitgleichen visuellen Darstellen von Medieninhalten auf einem Wiedergabeschirm**
Hybrid TV receiver with a video mixing device for multiple image playback for the simultaneous visual rendering of media content on a playback screen
Récepteur TV hybride doté d'un dispositif de mélange vidéo pour une restitution multi-images destinée à la représentation visuelle simultanée de contenus multimédia sur un écran de restitution

(30) Priorität: 30.05.2012 DE 102012209127
(43) Veröffentlichungstag der Anmeldung: 04.12.2013
(73) Patentinhaber: TechniSat Digital GmbH, 54550 Daun (DE)
(72) Erfinder: Baer, Hans-Joachim, 01109 Dresden (DE); Bellmann, Stefan, 01774 Höckendorf (DE); Pecher, Simon, 01187 Dresden (DE); Schneider, Falk, 02627 Hochkirch (DE); Münch, Ingo, 01279 Dresden (DE)

(56) Entgegenhaltungen:
- EP-A2- 1 853 058
- US-A1- 2002 095 689
- US-A1- 2007 277 199
- US-A1- 2010 138 859
- US-A1- 2011 248 986
- US-B1- 6 680 754

## Beschreibung

### Anwendungsgebiet der Erfindung

Die Erfindung betrifft einen Hybrid-TV-Empfänger mit einer Videomischeinrichtung für eine Mehrbildwiedergabe zum zeitgleichen visuellen Darstellen von Medieninhalt auf einem Wiedergabeschirm unabhängig von der Videokodierung und/oder Videobildauflösung des Medieninhalts.

Unter einer Mehrbildwiedergabe im Sinne dieser Erfindung sind beispielsweise: eine Bild im Bild-Darstellung PIP, eine Bildschirmanzeige OSD im aktuellen Wiedergabebild oder skalierte Teilbilder in Form einer sogenannten Bild und Bild-Darstellung PAP, auch als Split Screen bezeichnet zu verstehen.

Die Erfindung ist anwendbar in Hybrid-TV-Empfängern von digitalen Rundfunk- bzw. Kabelfernsehdiensten, nachfolgend als ,digitaler Videorundfunk', DVB, bezeichnet. Die TV-Empfänger sollen sowohl Empfangsmittel zum Bezug von hochauflösendem Videoinhalt über mindestens einem der Übertragungswege für digitalen Videorundfunk, wie per Satellit in der Form von DVB-S, Breitbandkabel in der Form von DVB-C oder terrestrisch in der Form von DVB-T, als auch Netzzugangsmittel zum Beschaffen und Darstellen von Medieninhalt aus einem Netzwerk, wie dem Internet, aufweisen.

### Technischer Hintergrund der Erfindung

Für eine Mehrbildwiedergabe hat die Videomischeinrichtung eines Hybrid-TV-Empfängers entweder die visuellen Medieninhalte von mindestens zwei Medienquellen des hochauflösenden digitalen Fernsehens HD-TV nach einem Codec gemäß eines MPEG-Standards oder der visuelle Medieninhalt einer Fernsehquelle nach einem MPEG-Standard mit HD-TV- oder Standard-Bildauflösung SD-TV zeitgleich mit dem visuellen Medieninhalt in einem weiteren Video- bzw. Bilddatenformat für einen anderen Codec, welcher von den für digitalen Videorundfunk DVB benutzten MPEG-Standard abweicht, zu mischen.

Die letztgenannte Situation kann beispielsweise dann auftreten, wenn über einem Audio/Video-Eingang eines TV-Empfängers visueller Medieninhalt mit einem Videodatenformat wiedergegeben werden soll, das nicht mit einen Hardware-MPEG-Standard-Decoder im Videosignalteil eines DVB-Empfängers decodierbar ist.

Die TV-Übertragungstechnik für Rundfunk- bzw. Kabelfernsehen nutzt nahezu vollständig eine digitale Audio- und Video-Datenübertragungsform, beispielsweise die Übertragungsstandards DVB-S, DVB-C, DVB-T, Internetfernsehen, auch Web-TV genannt, und das sogenannte Internet Protocol Television IPTV. Dafür werden an die Stelle von analogen Bild- und Tonsignalen binär-kodierte digitale Datenströme übertragen. Dabei wird für eine höhere Übertragungseffizienz die Datenmenge des Ursprungssignals durch Datenreduktion in einem Audio- bzw. Video-Datenkompressionsverfahren reduziert.

Öffentliche und private Rundfunkdienstanbieter nutzen standardmäßig für digitale Videorundfunkübertragungen zur Datenreduktion des Audio- bzw. des Videoinhalts ein Komprimier- bzw. ein Dekomprimierverfahren, einen sogenannten Audio/Video-Codec, entsprechend eines MPEG-Standards. Als Alternativen werden bezüglich des Videodatenformats entweder der MPEG-2 Standard, entsprechend ISO/IEC 13818, Teil 2, Video-Codec, oder der MPEG-4 Standard, entsprechend ISO/IEC 14496, Teil 10, Advanced Video Coding, AVC, welcher identisch mit dem ITU-T-Standard H.264 ist, einem Standard zur hocheffizienten Videokompression, verwendet.

Dabei können Rundfunkdienst- bzw. Netzdienstanbieter zwischen verschiedenen Audio/Video-Codecs und dem entsprechenden Datenformat für den Videodatenstrom frei wählen. Darüber hinaus dürfen die Dienstanbieter auch beide MPEG-Standards sowohl für TV-Übertragungen von Videoinhalt mit einer Videobildauflösung in einem Standard-Bildformat SD-TV oder Videoinhalt mit einer erhöhten horizontalen, vertikalen oder temporalen Videobildauflösung, dem Bildformat für hochauflösendes Fernsehen HD-TV, nutzen.

Das Standard-Bildformat SD-TV nutzt beispielsweise eine Videobildauflösung von 576 Bildpunkten vertikal und 768 oder 1024 Bildpunkten horizontal oder eine Videobildauflösung von nur 480 Bildpunkten vertikal und 720 Bildpunkten horizontal. Im Gegensatz dazu nutzt das hochauflösende Fernsehen HD-TV im Allgemeinen eine Videobildauflösung von 720 bzw. 1080 Bildpunkten vertikal und 1280 bzw. 1920 Bildpunkten horizontal. Eine Videobildauflösung mit einer realen physischen Auflösung von 1080 mal 1920 Bildpunkten gilt als, Full HD'-Fernsehen. Die Vielfalt der üblichen Videobildauflösungen stellt hohe Anforderungen an einen Videoprozessor, der die Aufgabe hat, Videoinhalt an eine feste physische Videobildauflösung eines digitalen TV-Flachbildschirms anzupassen.

Neben den beschriebenen Standard-Audio/Video-Codecs sind noch weitere Audi/Video-Codecs im Heimelektronikbereich in der Anwendung, welche wegen ihrer hohen Kompressionsrate und ihren Datenformat Quellsignale generieren, die mit Hardware-Standard-Decodern oft nicht dekomprimierbar sind.

Die Schaltungsstruktur eines herkömmlichen TV-Empfängers weist gewöhnlich für jedes DVB-Signalmodul im TV-Empfänger korrespondierende Video-Decoder auf, das heißt, mindestens sowohl einen MPEG-2 Decoder als auch einen MPEG-4 Decoder in Hardwareform.

Für den mit der Anmeldung beanspruchten Schutz ist es unerheblich, ob der TV-Empfänger selbst interne Mittel für eine Audio- und Videowiedergabe aufweist oder als Beistellgerät, eine sogenannte ,Set-Top-Box', mit einer Wiedergabevorrichtung verbunden ist. Im Sinne der Anmeldung ist auch eine Set-Top-Box, die mit einer beliebigen Wiedergabevorrichtung, beispielsweise einem Videoprojektor, verbunden ist, ein TV-Empfänger.

Es ist auch bereits üblich, dass herkömmliche TV-Empfänger Decoder-Steuermittel aufweisen, welche eine entsprechende MPEG-Decoder-Auswahl zum Decodieren der empfangenen digitalen Audio- und Videodatenströme automatisch treffen. Dafür enthält das DVB-Signalmodul des TV-Empfängers eine Steuereinheit zur Decoder-Steuerung, welche unter anderem jeweils die Daten mit Serviceinformation DVB-SI zum Beschreiben des Audio- bzw. Videodatenstroms eines aktuell empfangenen Rundfunkdienstes bzw. Netzdienstes hinsichtlich des benutzten Audio- bzw. Videodatenformats auswertet. Zum Rückgewinnen eines unkomprimierten Videosignals aus dem kodierten Videodatenstrom wählt die Steuereinheit entsprechend dieser Daten zum aktuell empfangenen Rundfunkdienst bzw. Netzdienst einen dem benutzten Videodatenformat entsprechenden MPEG-Decoder aus und aktiviert diesen.

TV-Empfänger mit erweiterten Komfortfunktionen für digitale Videorundfunk- und Netzdienste geben als multimediale Steuerzentrale neben dem Medieninhalt von Hör- oder Fernsehsendungen auch den Medieninhalt anderer Medienquellen wieder, beispielsweise von Audio- und Videoabspielgeräten oder Fotos. Darüber hinaus können derartige TV-Empfänger auch mit einer integrierten digitalen Videoaufzeichnungsfunktion ausgestattet sein. Somit stellt ein mit zusätzlichen Komfortmerkmalen ausgestatteter TV-Empfänger gleichzeitig jeweils Medieninhalt über verschiedene Wege, zumindest teilweise in verschiedenen Videoformaten und/oder mit verschiedenen Komprimierungsverfahren, bereit.

Ein wesentliches Funktionselement für die Erfindung ist eine Datenschnittstelle mit einem Datenbussystem nach dem Standard: Universal Serial Bus, USB. Diese Datenschnittstelle erlaubt bekanntlich eine serielle Datenübertragung zwischen einer zentralen Computereinheit CPU in einem Host-Computer und peripheren Geräten, wobei an einem USB-Port immer nur ein USB-Gerät angeschlossen werden kann. Ein zentraler Host-Controller übernimmt die Koordination der angeschlossenen peripheren Geräte. Als periphere Geräte kommen zum Beispiel Ein- bzw. Ausgabegeräte oder externe Speichermittel infrage.

Innerhalb eines am Bus angeschlossenen Gerätes lassen sich verschiedene Schnittstellen definieren, die jeweils über einen oder mehrere Endpunkt(e) verfügbar sind. Die USB-Datenschnittstelle bietet den angeschlossenen Geräten verschiedene Übertragungsmodi an und kann verschiedene Übertragungsmodi zwischen den Endpunkten vereinbaren. Somit kann jedes USB-Gerät über eine Anzahl von durchnummerierten adressierbaren Endpunkten verfügen, welche in den Geräten als Hardwareelemente verknüpft sein können und eine sogenannte ,Serial Interface Engine' betreiben. Die Serial Interface Engine wirkt in der untersten Schicht des USB-Protokolls. Die höheren Schichten des Protokolls können über die Firmware des Host-Computers gesteuert werden. Über den Endpunkten können voneinander unabhängige Datenströme laufen. Ein Gerät mit mehreren implementierten Funktionen, beispielsweise zum Bearbeiten von Video- und Audiodatenströmen, benötigt mehrere Endpunkte.

Für die vorliegende Patentanmeldung sind ein als Interrupt-Transfer-Modus bezeichneter Übertragungsmodus und ein Bulk-Transfer-Modus interessant.

Der Interrupt-Transfer-Modus dient zum Übertragen von kleinen Datenmengen, die zu nicht genau bestimmbaren Zeitpunkten verfügbar sind. Dabei wird vom Host-Controller periodisch eine Datenabfrage am peripheren Gerät vorgenommen. Das periphere Gerät teilt dem Host-Controller mit, mit welchen Zeitabständen dieser die periodische Datenabfrage vornehmen soll.

Der Bulk-Transfer-Modus überträgt große Datenmengen, welche nicht zeitkritisch sind mit niedriger Priorität. Der Transfer erfolgt, wenn alle Interrupt-Transfers abgeschlossen sind und noch nutzbare Datenrate verfügbar ist.

Im Interesse der Übersichtlichkeit von parallel verfügbarem Medieninhalt aus verschiedenen Medienquellen ist es wünschenswert, dass die Bildverarbeitungseinrichtung für den TV-Empfänger eine Mehrbildwiedergabe, insbesondere Bild- bzw. Videoeinblendungen, ermöglicht, bei dem Videoinhalt aus mehreren Medienquellen gleichzeitig auf einem Wiedergabeschirm darstellbar ist. Für Bild- bzw. Videoeinblendungen benutzen konventionelle TV-Empfänger häufig zur Signalaufbereitung der Videodatenströme bzw. Bilddaten einen Videoprozessor mit einem Hardware-Videodecoder und einer Videomischeinrichtung zum Anpassen der Videodatenströme mehrerer Medienquellen unabhängig vom benutzten Videodatenformat und der vorliegenden Videobildauflösung. Das Anpassen der Videodatenströme realisiert der Videoprozessor beispielsweise durch Konvertieren des Bildformats, Skalieren der Bildauflösung und Mischen der gemeinsam darzustellenden Videoinhalte mit der Videomischeinrichtung. So kann die Videomischeinrichtung die gewünschte Mehrbildwiedergabe beispielsweise als ein Vorschaufenster mit dem Videoinhalt einer ausgewählten Medienquelle, wie einer Internetseite oder die Startseite eines Mediaplayers, in die Vollbildwiedergabe des aktuell empfangenen Videodatenstroms einblenden.

Die Bildwiedergabe des aktuell empfangenen Videodatenstroms mit höchster Bildauflösung kann alternativ auch durch eine visuelle Anordnung des aktuell empfangenen abwärtsskalierten Videodatenstroms zeitgleich mit mindestens einer weiteren visuellen Medieninhaltdarstellung aus einer weiteren Medienquelle, beispielsweise einer Internetseite, ersetzt werden. Das heißt, unabhängig vom Videodatenformat befinden sich von mehreren Medienquellen skalierte Videos, Standbilder oder Graphiken zeitgleich auf dem Wiedergabeschirm.

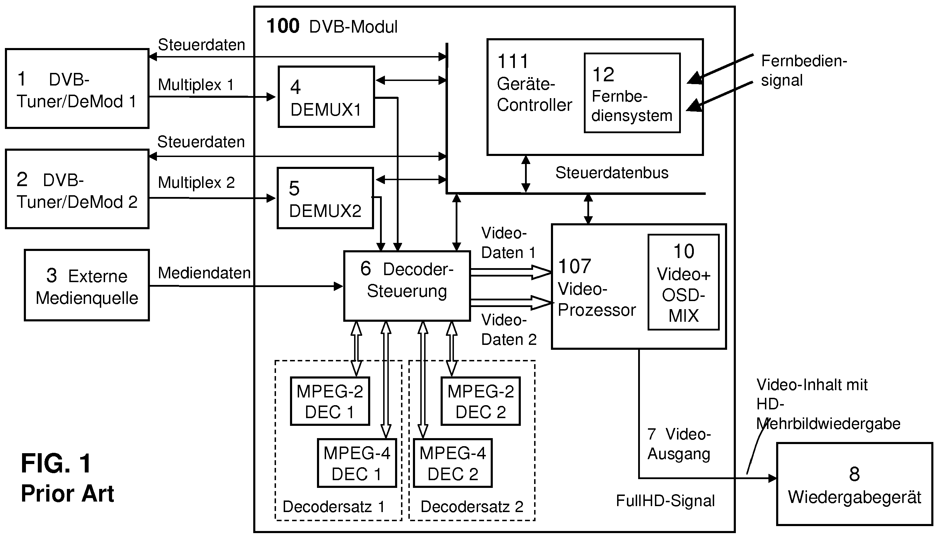

FIG. 1 zeigt beispielhaft eine Schaltungsstruktur für ein DVB-Modul 100 eines TV-Empfängers, welche Medieninhalte mehrerer Medienquellen unabhängig vom benutzten Videodatenformat und der vorliegenden Videobildauflösung zeitgleich auf einen Wiedergabeschirm eines Wiedergabegerätes 8 visuell darstellt. Ein nicht gezeigter Empfängernutzer kann beim Eingeben eines Wunsches nach einer Mehrbildwiedergabe über ein Fernbediensystem 12 des TV-Empfängers zwischen den Medienquellen 1 bis 3 umschalten sowie der Art der Mehrbildwiedergabe, das heißt zwischen einer Bild im Bild-Darstellung PIP und einer Bild und Bild-Darstellung PAP, auswählen.

Im dargestellten Beispiel sind die Medienquellen 1 und 2 jeweils eine DVB-Tuner/Demodulator-Einheit 1 und 2, welche unabhängig voneinander jeweils einen DVB-Transportmultiplex, in den Figuren als Multiplex 1 bzw. Multiplex 2 gekennzeichnet, empfangen. Der gezeigte TV-Empfänger ist somit mit einem Doppeltunersystem zum unabhängigen, gleichzeitigen Empfang von zwei Rundfunkdiensten ausgestattet. Das ermöglicht beispielsweise mit einem TV-Empfänger einen ersten Transportmultiplex zur Wiedergabe eines ersten Programmbeitrages in Echtzeit zu empfangen, während ein anderer Programmbeitrag aus einem anderen Transportmultiplex auf einem Speichermedium aufgezeichnet wird. Die beiden Transportmultiplexe können sowohl TV-Programminhalt von verschiedenen Transportdatenströmen als auch Videodatenströme mit verschiedenen Videodatenformaten und/oder Videobildauflösungen enthalten. Ein vom Gerätenutzer über das Fernbediensystem 12 bedienbarer Geräte-Controller 111 verwaltet mit einem Steuer-Datenbus die Abstimmung beider Doppeltunersysteme auf Transportmultiplexe mit Rundfunkdiensten entsprechend einer Programmauswahl des Empfängernutzers. Neben den Eingängen für den Multiplex 1 und Multiplex 2 enthält das DVB-Signalmodul 100 noch einen dritten Eingang für den Bezug von Mediendaten von einer externen Medienquelle 3, beispielsweise eines Videoabspielgerätes, welches über eine HDMI-Schnittstelle an das DVB-Modul 100 angeschlossen sein kann. Den Ausgängen der Medienquellen 1 und 2 folgen im DVB-Modul 100 jeweils ein Demultiplexer 4 bzw. 5. Diese extrahieren aus den Multiplexen 1 und 2, welche die DVB-Tuner/Demodulator-Einheiten 1 und 2 empfangen, die Audio- und Videodatenströme der vom Empfängernutzer ausgewählten Rundfunkdienste sowie Serviceinformation für den Gerätecontroller 111 zum Abstimmen der Funktionselemente des DVB-Signalmoduls 100 und der DVB-Tuner/Demodulator-Einheiten 1 und 2 über den Steuerdatenbus.

Sowohl die Demultiplexer 4 bzw. 5 als auch die Medienquelle 3 stellen komprimierte kodierte Audio- und Videodatenströme mit Programminhalt einzelner Rundfunkdienste bzw. Wiedergabegeräte bereit.

Zusätzlich kann die Medienquelle 3 ein digitaler Camcorder oder ein digitaler Recorder sein, der einen komprimierten Videodatenstrom mit höherer Datenkompression bereitstellt und deshalb nicht mit einem konventionellen MPEG-Decoder in Hardwareform decodierbar ist.

Da jedoch für eine oben genannte Mehrbildwiedergabe neben der aktuellen Audiowiedergabe kein weiterer Audiodatenstrom wiedergegeben werden soll, wird in den nachfolgenden Ausführungen nur der Weg der beiden Videodatenströme mit Videoinhalt dargestellt.

Wie oben beschrieben, dürfen die aus den Demultiplexern 4 bzw. 5 und der Medienquelle 3 erhaltenen Videodatenströme verschieden komprimierte Videodatenformate und Videobildauflösungen enthalten, sodass vor dem Decodieren der beiden von den Demultiplexern 4 bzw. 5 erhaltenen komprimierten Videodatenströme eine Auswahl eines entsprechenden Decodiermittels erforderlich ist.

Während eines Fernsehbetriebs, bei dem der Videodatenstrom eines ersten Rundfunkdienstes auf dem TV-Bildschirm des Wiedergabegerätes 8 angezeigt und ein zweiter Videodatenstrom eines weiteren Rundfunkdienstes zeitgleich aufgezeichnet werden soll, ist immer nur ein einziger Video-Decoder aktiv, entweder ein MPEG-2 Decoder oder ein MPEG-4 Decoder. Der Grund dafür liegt darin, dass nur der Videodatenstrom zur Wiedergabe auf dem TV-Bildschirm zu decodieren ist, während zum Einsparen von Speicherkapazität auf dem Speichermedium sowohl der Audio- als auch Videodatenstrom vorteilhaft komprimiert und damit kodiert aufgezeichnet werden kann. Die komprimiert aufgezeichneten Datenströme werden erst bei der Aufzeichnungswiedergabe decodiert. Dafür wird jeweils ein Video-Decoder, beispielweise aus einem Decodersatz 1 mit dem MPEG-2 DEC 1 und dem MPEG-4 DEC 1, genutzt, welcher bereits während der Aufzeichnung des weiteren Rundfunkdienstes zum Wiedergeben des ersten Rundfunkdienstes zur Auswahl verfügbar war. Da die Wiedergabe der Videodatenströme nacheinander erfolgt, wird für jedes Videodatenformat jeweils nur ein entsprechender Decoder benötigt und der Decodersatz 2 mit dem MPEG-2 DEC 2 und dem MPEG-4 DEC 2 ist unnötig.

Im beschriebenen TV-Betrieb wählt die Decoder-Steuerung 6 jeweils abhängig vom Videodatenformat des Videodatenstroms zum Anzeigen auf dem TV-Bildschirm den entsprechenden Videodecoder aus und führt den decodierten Videodatenstrom 1 der Eingangsstufe eines Videoprozessors 107 zu.

Der Videoprozessor 107 passt den Videodatenstrom 1 an das Videodatenformat und die Videobildauflösung des am Video-Ausgang 7 liegenden Bildwiedergabegerätes 8 an.

Im vorliegenden Fall ist das Bildwiedergabegerät 8 für hochauflösendes Fernsehen HD-TV mit einer physischen Videobildauflösung für Full HD-Fernsehen ausgelegt. Der Gegenstand der Erfindung kann jedoch auch bei einem TV-Empfänger angewendet werden, der am Videoausgang 7 des DVB-Signalmoduls 100 ein anderes Bildwiedergabegerät 8 nutzt, beispielsweise ein analoges Bildröhrenwiedergabegerät über einen Euro-AV-Anschluss SCART.

Im oben genannten TV-Betrieb zum zeitgleichen Wiedergeben und Aufzeichnen je eines Rundfunkdienstes hat die Decoder-Steuerung 6 im Beispiel nach FIG. 1 nur die alternative Nutzung des MPEG-2 DEC 1 oder des MPEG-4 DEC 1 zu verwalten. Der Decoder-Steuerung 6 kommt jedoch, wie weiter unten gezeigt wird, eine größere Verwaltungsaufgabe zu, wenn der Empfängernutzer die oben beschriebene Mehrbildwiedergabe zur Wiedergabe von Videoinhalt aus verschiedenen Quellen einschaltet oder wenn die externe Medienquelle 3 Video- und/oder Bilddaten bereitstellt, welche die Decoder-Steuerung 6 mit den MPEG-Standard-Decodern MPEG-2 DEC 1 oder des MPEG-4 DEC 1 nicht dekomprimieren kann.

Wie oben dargestellt, enthält der Videoprozessor 107 eine Videomischeinrichtung 10, welche neben dem Einblenden von Informations- und Bedienmenüs, beispielsweise auch das Anzeigen einer elektronischen Programmführungseinrichtung in die aktuelle Videowiedergabe, auch Mehrbildwiedergabe ermöglicht. Die Videomischeinrichtung 10 im Videoprozessor 107 kann technisch bedingt nur unkomprimierte Videodatenströme überlagern. Dies hat die Konsequenz, dass die Decoder-Steuerung 6 jeweils abhängig vom benutzten Videokodierformat stets zwei decodierte Videodatenströme Videodaten 1 und Videodaten 2 bereitstellen muss.

Für eine uneingeschränkte Nutzung der Mehrbildwiedergabe müssen neben zwischen den Standards MPEG 2 und MPEG 4 gemischten Kodierformaten auch zwei Videodatenströme im gleichen Kodierformat zeitgleich zum Überlagern bereitstehen. Das heißt, die zwei mit der Decoder-Steuerung 6 in einer Interaktion mit dem Geräte-Controller 111 eingangsseitig ausgewählten kodierten Datenströme können zwei MPEG-2 Datenströme oder zwei MPEG-4 Datenströme sein. Dafür benötigt das DVB-Modul 100 jeweils zwei Videodecoder für jedes Kodierformat; das sind der Decodersatz 1 mit den Decodern MPEG-2 DEC 1 und MPEG-4 DEC 1, sowie der Decodersatz 2 mit den Decodern MPEG-2 DEC 2 und MPEG-4 DEC 2.

In der Mehrbildwiedergabe besteht die erweiterte Verwaltungsaufgabe der Decoder-Steuerung 6 darin, jedem codierten Videodatenstrom der vom Nutzer ausgewählten Medienquellen eingangsseitig ein dem Videokodierformat entsprechenden Videodecoder der Decodersätze 1 bzw. 2 zuzuweisen, sodass ausgangsseitig zeitgleich über die Videodatenkanäle 1 und 2 zwei decodierte Videodatenströme 1 und 2 zur Videomischeinrichtung 10 im Videoprozessor 107 gesendet werden.

Ein Steuerdatenbus zwischen dem Geräte-Controller 111, den Medienquellen 1 bis 3, den Demultiplexern 4 und 5, der Decoder-Steuerung 6 und dem Videoprozessor 107 ermöglicht eine Interaktion zwischen den Einheiten. Ein Empfängernutzer kann über das Fernbediensystem 12 und dem Steuerdatenbus zwei kodierte Videodatenströme von dem über die Medienquellen 1 bis 3 aktuell verfügbaren Medieninhalt auswählen und dafür eine Mehrbildwiedergabe definieren, die den Videoinhalt der ausgewählten Videodatenströme nach dem Decodieren in der Videomischeinrichtung 10 überlagert. Darüber hinaus kann auch der Fall auftreten, dass die Decoder-Steuerung 6 nicht über die entsprechenden Ressourcen zum Dekomprimieren der Video- und/oder Bilddaten von der externen Medienquelle 3 verfügt.

Der Videoprozessor 107 passt gegebenenfalls unterschiedliche Videobildauflösungen der beiden decodierten Videodatenströme 1 und 2 an, sodass am Video-Ausgang 7 ein an die logische Videobildauflösung des TV-Bildschirms im Wiedergabegerät 8 angepasstes VideoSignalformat zur Verfügung steht.

Aus den bisherigen Ausführungen ist ersichtlich, dass sowohl beim konventionellen Betrieb eines TV-Empfängers als auch beim zeitgleichen Benutzen der integrierten digitalen Videoaufzeichnungsfunktion oder dem Aufzeichnen eines angeschlossenen digitalen Videorecorders immer nur ein Video-Decoder aktiv sein muss. Das heißt, für die genannten Fernsehbetriebsfunktionen wird stets nur ein Decodersatz benötigt. Die Video-Decoder eines zweiten Decodersatzes werden erst in einer Mehrbildwiedergabe benötigt. Darüber hinaus sind auch weitere Decodiermittel nötig, wenn die externe Medienquelle Video- und/oder Bilddaten liefert, welche nicht von den Hardware-Decodern MPEG-2 DEC 1 oder MPEG-4 DEC 1 decodierbar sind.

Grundsätzlich können auch Software-Anwendungen sowohl einen MPEG-2 als auch einen MPEG-4 Decoder realisieren. Da diese jedoch für eine Echtzeitanwendung, wie der Wiedergabe von TV-Inhalt, eine beachtliche Rechenkapazität und Rechengeschwindigkeit benötigen, welche das DVB-Modul, insbesondere der Video-Decoder eines üblichen TV-Empfängers, nicht aufbringen kann, stellen diverse Schaltkreishersteller integrierte Schaltungen für dedizierte Hardware her, welche die erforderlichen Video-Decoderfunktionen durch zusätzliche Hardware realisieren. Diese Schaltkreise enthalten beispielsweise einen IC-Satz mit einem Videoprozessor mit Peripherie für die MPEG-2 Decodierung sowie einen Coprozessor für die Decodierung des MPEG-4 Inhalts, welcher zusätzliche Speichermittel erfordert. Beide Prozessoren nutzen oft Hardware-Ressourcen eines IC-Satzes für beide Decodierungen gemeinsam.

Die beschriebene Mehrfachausführung verschiedener Video-Decodersätze stellt im Verhältnis zum Funktionszuwachs beim TV-Empfänger bezüglich Kosten und Material einen spürbaren Mehraufwand dar.

Der US 2002/095689 A1 ist zu entnehmen, dass eine STB (Set-Top-Box) neben den Komponenten zum herkömmlichen TV-Empfang (Video Tuner, Demodulator, Decoder, Audio/Video-Controller) auch zusätzliche Komponenten zum Verarbeiten von Internetinhalten aufweisen kann. Dazu wird über den herkömmlichen TV-Empfangseingang und das angeschlossene Breitband-Kabel-Netzwerk eine Internetverbindung mittels eines Modems zum Internet aufgebaut. Über die Internetverbindung gelangen Internetinhalten in die Set-Top-Box. Es ist vorgesehen, die Internetinhalte gemäß MPEG-2/MPEG-4 mittels einer CPU zu decodieren. Mithin weist die Lösung sowohl einen Hardware-Decoder als auch einen Software-Decoder auf, wobei die Bildwiedergabe lediglich zwischen den decodierten Videodaten der beiden Decoder wechseln kann, was nachteilig ist.

Es ist deshalb Aufgabe der vorliegenden Erfindung, den Hardwareaufwand für eine Vielzahl verschiedener Video- und/oder Bild-Decodern in einer Bildverarbeitungseinrichtung eines TV-Empfängers zu verringern und dennoch möglichst alle Video- und/oder Bilddatenformate für Medieninhalte verschiedener digitaler Medienquellen auf Nutzerwunsch sowohl einzeln als auch in einer Mehrbildwiedergabe zeitgleich unabhängig vom Kodierformat, bereitzustellen und auf einem Wiedergabeschirm darzustellen.

### Darstellung der Erfindung

Zum Lösen der vorgenannten Aufgabe geht die vorliegende Bildverarbeitungseinrichtung von einem Hybrid-TV-Empfänger aus, welcher neben einem durch einen Gerätecontroller kontrolliertes DVB-Modul ein Netzwerkmodul aufweist.

Das DVB-Modul enthält neben dem Gerätecontroller Video-Decodiermittel, welche von einer Decoder-Steuerung gesteuert werden, und einem Videoprozessor, welcher Videodatenströme an ein Videodatenformat und eine Videobildauflösung eines ausgangsseitigen Video-Wiedergabegerätes anpasst und eine Videomischeinrichtung für eine Video- bzw. Bildeinblendung aufweist.

Das Netzwerkmodul steht unter der Kontrolle des Gerätecontrollers auf der DVB-Modulseite und beschafft über einen Netzzugang Modulcontroller audio-visuellen Medieninhalt für den Hybrid-TV-Empfänger. Dafür enthält das Netzwerkmodul eine Schaltungsstruktur mit einem netzmodulseitigen Modulcontroller, welcher als Co-Controller im Steuerdatenverbund mit dem DVB-modulseitigen Geräte-Controller und eine Interneteinheit mit einem Netzzugang zu einem Netzwerk die Internetfunktion entsprechend den Wünschen des Empfängernutzers realisiert.

Darüber hinaus enthält das Netzwerkmodul einen Permanentspeicher, in dem eine Unterroutine zum Erfassen und Verwalten einer Software-Codec-Bank abgelegt ist. Der netzmodulseitige Modulcontroller ist in der Lage, fehlende Software-Codecs zu identifizieren und diese mittels mindestens einer gespeicherten Internetadresse über den Netzzugang bei einem Software-Dienstleister in einem Downloadverfahren zu beschaffen.

Der Empfängernutzer bedient das Netzwerkmodul durch Eingabe seiner Wünsche, beispielsweise zur Selektion von Medienquellen in ein Fernbediensystem, welches mit dem Gerätecontroller im DVB-Modul zusammenwirkt.

Zur visuellen Wiedergabe von Internetinhalt, welchen die Interneteinheit über einen Netzwerkzugang beschafft, übernimmt der DVB-modulseitige Videoprozessor die Signalaufbereitung und Anpassung der für Video- bzw. Bilddatenformate und der physischen Videobildauflösung an die Wiedergabeparameter eines TV-Bildschirms in einem Bildwiedergabegerät.

Der DVB-modulseitige Gerätecontroller und der netzmodulseitige Modulcontroller sind über eine Steuerdatenverbindung, welche DVB-modulseitige und netzmodulseitige Daten-Managermittel verwalten, miteinander verbunden. Somit kann der Modulcontroller über das DVB-modulseitige Fernbediensystem Steuerdaten von Nutzereingaben zum Ausführen von Internetaktionen entgegennehmen. Dabei erfolgt ein bidirektionaler Datenaustausch über die Steuerdatenverbindung zwischen einem ersten Datenmanager im Gerätecontroller und einem zweiten Datenmanager im Modulcontroller.

Die Interneteinheit enthält einen Mediaplayer zum Aufbereiten von audio-visuellem Medieninhalt, welchen die Interneteinheit über den Netzwerkzugang bezieht und eine Software-Decoderbank mit mindestens einem Video-Codec zum Decodieren von Video- und/oder Bilddaten.

Ein Videodatenausgang des Netzwerkmoduls ist über eine digitale Videodatenverbindung mit einem Videodateneingang des DVB-modulseitigen Videoprozessors verbunden, um einen Videodatenstrom vom Mediaplayer und dessen Software-Decodiermittel entgegenzunehmen und zur visuellen Wiedergabe des Internetinhalts für das Video-Wiedergabegerät bezüglich Videosignalformat und Videobildauflösung anzupassen.

Zum Lösen der Aufgabe gemäß der vorliegenden Patentanmeldung weist das DVB-Modul eine Decoder-Steuerung auf, welche gegenüber konventionellen Hybrid-TV-Empfängern mit einer erweiterten Videodatencontroller-Software ausgestattet ist.

Eine Erweiterung der Videodatencontroller-Software für die Decoder-Steuerung überprüft gemäß der Erfindung periodisch oder ständig, ob an Video-Datenstromeingängen der Decoder-Steuerung eingehende Video- und/oder Bilddaten aus DVB-Multiplexen von DVB-Tunern oder einer externen Medienquelle mit den Hardware-Decodiermitteln (MPEG-2 DEC, MPEG-4 DEC) des DVB-Moduls decodierbar sind.

Sobald die erweiterte Videodatencontroller-Software erkennt, dass solche Video- bzw. Bilddaten in das DVB-Modul eingehen, für welche die Decoder-Steuerung keine entsprechenden Hardware-Decodiermittel (MPEG-2 DEC, MPEG-4 DEC) verfügbar hat, sendet die Video-Datencontroller-Software eine Codec-Anfrage zum netzmodulseitigen Modulcontroller zum Bereitstellen eines entsprechenden Software-Decoders durch die Interneteinheit.

Die entsprechende Codec-Anfrage richtet die erweiterte Videodatencontroller-Software auch zum netzmodulseitigen Modulcontroller, wenn diese erkennt, dass für eine Mehrbildwiedergabe auf dem Wiedergabeschirm im DVB-Modul die Anzahl der verfügbaren, geeigneten Hardware-Decodiermittel zum Decodieren der gewünschten visuellen Medieninhalte unzureichend ist. Beispielsweise weil nur ein einziger MPEG 4-Hardware-Decoder im DVB-Modul verfügbar ist.

Nach dem Erkennen eines Bedarfs an zusätzlichen Video-Decodiermitteln, insbesondere bei mangelnder Verfügbarkeit von für die Deodierung der Video- bzw. Bilddaten an den Video-Datenstromeingängen geeigneten Hardware-Decodiermitteln (MPEG-2 DEC, MPEG-4 DEC), bewirkt die Erweiterung der Videodatencontroller-Software gemäß der vorliegenden Anmeldung, dass der erste Datenmanager im DVB-Modul den kodierten Videodatenstrom (Video-DS), für den entsprechende Decodiermittel fehlen, in einem Datenmultiplex gemeinsam mit Steuerdaten des Gerätecontrollers zum zweiten Datenmanager im Modulcontroller des Netzwerkmoduls sendet.

Der zweite Datenmanager trennt im Datenmultiplex die kodierten Video- bzw. Bilddaten von den Steuerdaten des Gerätecontrollers und bewirkt ein Decodieren des kodierten Videodatenstroms mit dem Mediaplayer und dessen Software-Codec-Bank.

Nach einer vorteilhaften Ausführung der Erfindung enthält das Netzwerkmodul einen Adressenspeicher für einen Netzwerkserver, der in der Lage ist, fehlende Software-Codecs per Download zu liefern. In Folge einer Interaktion zwischen der DVB-modulseitigen Decoder-Steuerungs-Software und dem netzmodulseitigen Modulcontroller kann der TV-Empfänger selbst mit einer geringen Anzahl an Hardware-Decodern eine Vielzahl verschiedener Codecs für Video- und/oder Bild-Decoder liefern, um den TV-Empfänger dynamisch an eine wachsende Vielfalt von Aufgaben zur Video- bzw. Bild-Decodierung anzupassen. Somit kann mit geringem Aufwand sowohl das visuelle Darstellen des Medieninhalts einer einzelnen Medienquelle als auch die Mehrbildwiedergabe verschiedener Medienquellen wachsenden Bedürfnissen angepasst werden.

Der erste Datenmanager ist so konfiguriert, dass dieser den kodierten Videodatenstrom in einem Datenmultiplex aus Steuer- und Videodaten wandelt und über die Steuerdatenverbindung zum zweiten Datenmanager überträgt.

Gemäß der Erfindung nutzt die Decoder-Steuerung somit vorrangig zum Decodieren eines Videodatenstroms die Decodiermittel des DVB-Moduls und beim Fehlen entsprechender Deckodiermittel im DVB-Modul entsprechende Software-Decodiermittel des Mediaplayers.

### Bevorzugte Ausführung der Erfindung

Die Erfindung soll nachstehend anhand eines Ausführungsbeispiels erläutert werden.

Zur besseren Veranschaulichung dienen die beigefügten Figuren 1 bis 3, von denen zeigen:
FIG. 1 eine grundsätzliche Struktur eines bekannten TV-Empfängers mit zwei Empfangsteilen 1, 2 und einem Medieneingang zum Anschließen von externen Medienquellen 3 mit Programminhalt. Die Struktur ermöglicht eine Mehrbildwiedergabe von Videoinhalt weiterer Medienquellen in eine laufende Videowiedergabe. Der Videoinhalt von Videodatenströmen für die Mehrbildwiedergabe kann verschiedene Videokodierformate und Videobildauflösungen aufweisen.

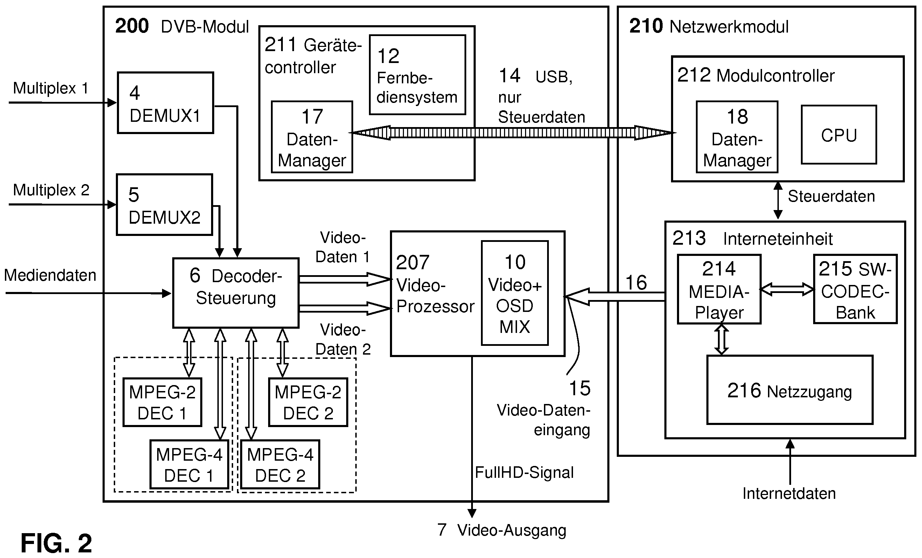

FIG. 2 eine grundsätzliche Struktur eines fiktiven Hybrid-TV-Empfängers mit zwei Empfangsteilen und einem Medieneingang zum Anschluss von externen Medienquellen mit hochauflösendem Programminhalt und einem Netzwerkmodul mit einer von einer CPU betriebenen Interneteinheit zum Anfordern und Aufbereiten von Medieninhalt und Wiedergeben des Medieninhalts über einen Videoprozessor im DVB-Modul eines Hybridempfängers mit einem Wiedergabegerät .

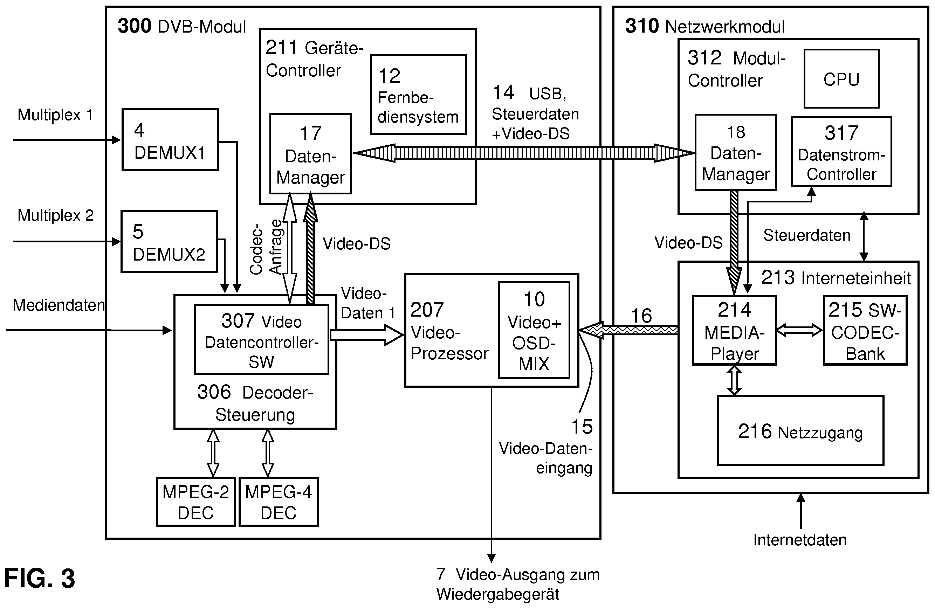

FIG. 3 eine Struktur eines Hybridempfängers in einer Ausführungsform gemäß der Erfindung zum mehrfachen Nutzen von Video-Decodiermitteln in einem Netzwerkmodul 310 und

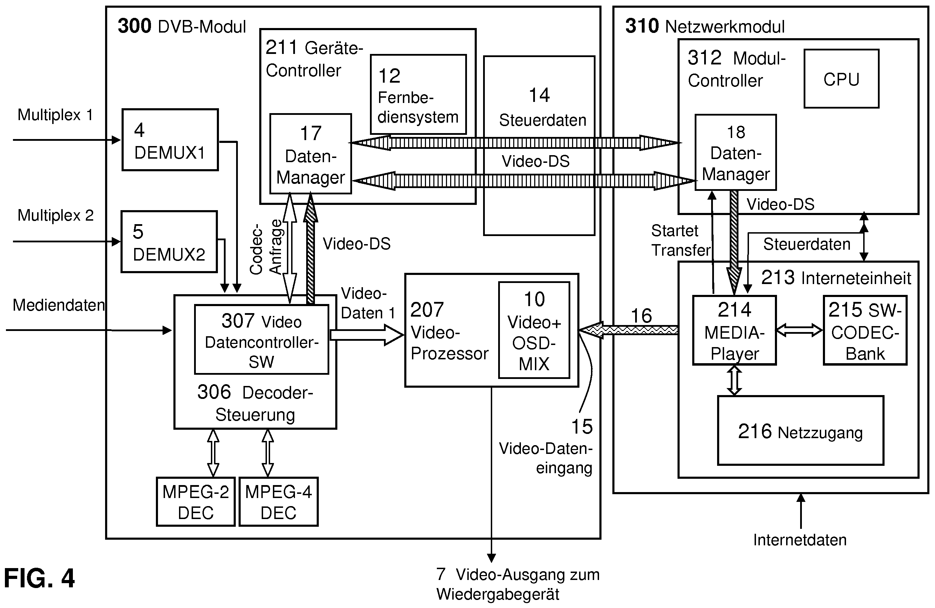

FIG. 4 eine weitere Ausführungsform der Erfindung.

FIG. 1 wurde bereit als technischer Hintergrund dargestellt und zeigt ein DVB-Modul 100, welches einen doppelten Decodersatz aufweist.

Das in FIG. 2 gezeigte DVB-Modul 200 unterscheidet sich vom DVB-Modul 100 im Wesentlichen durch einen veränderten Gerätecontroller, der zusätzlich einen Daten-Manager 17 aufweist, um mit einem Modulcontroller 212 im Netzwerkmodul 210 zu kommunizieren und einem geänderten Videoprozessor 207, der zusätzlich einen Videodateneingang 15 zum Empfangen von decodierten Videodatenströmen durch einen Mediaplayer 214 in der Interneteinheit 213 aufweist. Die Figur 2 zeigt somit die grundsätzliche Struktur des fiktiven Hybridempfängers mit zwei Empfangsteilen und einem Medieneingang zum Anschluss von externen Medienquellen mit Programminhalt und einem Internet-Modul, wobei die Videoinhalte verschiedene Videokodierformate und verschiedene Videobildauflösungen aufweisen können und der Fähigkeit zum oben beschriebenen Videoeinblendmodus.

Der Hybrid-TV-Empfänger nach FIG. 2 weist zum zeitgleichen Darstellen von Videoinhalt mehrerer digitaler Videodatenströme unabhängig von einem Videokodierformat und einer Videobildauflösung auf einem Wiedergabeschirm die nachfolgend genannten Hard- und Softwarekomponenten auf:
ein durch einen Gerätecontroller 211 kontrolliertes DVB-Modul 200 mit von einer Decoder-Steuerung 6 gesteuerten Videodecodern (MPEG-2 DEC, MPEG-4 DEC) und einem Videoprozessor 207, welcher Videodatenströme an ein Videodatenformat und eine Videobildauflösung des ausgangsseitigen Video-Wiedergabegerätes 8 anpasst und eine Videomischeinrichtung 10 für den Videoeinblendmodus,
ein Netzwerkmodul 210, das eine Interneteinheit 213 mit einem Netzzugang 216 enthält, welche unter der Kontrolle des DVB-modulseitigen Gerätecontrollers 211 über einen netzmodulseitigen Modulcontroller 212 eine Internetfunktion realisieren,
einen Mediaplayer 214 in der Interneteinheit 213 mit Video-Decodiermitteln zum Aufbereiten von audio-visuellem Medieninhalt, welchen die Interneteinheit 213 über den Netzzugang 216 beschafft,
eine digitale Videodatenverbindung 16 zwischen einem Ausgang des Mediaplayers 214 und einem Videodateneingang 15 des Videoprozessors 207, um Videodatenströme vom Mediaplayer 214 zur visuellen Wiedergabe mit dem Wiedergabegerät 8 bezüglich Videosignalformat und Videobildauflösung anzupassen,
eine Steuerdatenverbindung 14 zwischen einem ersten Datenmanager 17 im Gerätecontroller 211 und einem zweiten Datenmanager 18 im Modulcontroller 212, welche Eingaben durch Empfängernutzer in das Fernbediensystem 12 zum Modulcontroller im Netzwerkmodul 210 überträgt.

FIG. 3 zeigt eine Ausführungsform gemäß der Erfindung.

In den Figuren 2 und 3 wurden Funktionselemente, welche eine unveränderte Funktion ausüben, mit den gleichen Bezugszeichen versehen.

Das Decodieren eines Videodatenstroms oder von Bilddaten einer Medienquelle, für welche die Decoder-Steuerung 306 keinen entsprechenden Hardware-Decoder MPEG-2 DEC oder MPEG-4 DEC verfügbar hat, erfolgt mit der Bildverarbeitungseinrichtung nach FIG. 3 wie folgt:
Die gegenüber FIG. 2 geänderte Decoder-Steuerung 306 weist zusätzlich eine Video-Datencontroller-Software 307 auf, welche ständig oder periodisch die Decodierbarkeit aller im DVB-Modul 300 eingehender Video- und/oder Bilddaten überprüft. Beim Erkennen einer temporär oder permanent fehlenden Decodiermöglichkeit durch die Decoder-Steuerung 306 für Video- bzw. Bilddaten von Medienquellen sendet die Video-Datencontroller-Software 307 eine Anfrage zum netzmodulseitige Modulcontroller 312 zum Bereitstellen eines entsprechenden Software-Decoders aus einer Software-Codec-Bank 215 der Interneteinheit 213.

Sofern der Modul-Controller 312 im Netzwerkmodul 310 erkennt, dass die Software-Codec-Bank 215 zum Decodieren gemäß Anfrage keinen geeigneten Software-Decoder aufweist, beschafft sich der Modulcontroller 312 den benötigten Software-Decoder mittels einer gespeicherten Datenbankadresse von einem Netzwerkserver über den Netzzugang 216.

Der Datenmanager 17 ist so konfiguriert, dass dieser den kodierten Videodatenstrom Video-DS in einem Datenmultiplex aus Steuer- und Videodaten wandelt und über die Steuerdatenverbindung 14 zum zweiten Datenmanager 18 überträgt.

Eine Datenstrom-Controller-Software 317 leitet nach dem Decodieren des Videodatenstroms Video-DS mit den Video-Decodiermitteln des Mediaplayers den decodierten Videodatenstrom über die digitale Videodatenverbindung 16 zum Videodateneingang 15 des Video-Prozessors 207. Damit steht sowohl dem Videoprozessor 207 als auch der Videomischeinrichtung 10 der über das Netzwerkmodul 310 umgeleitete decodierte Video- bzw. Dateninhalt einer ausgewählten Medienquelle zur weiteren Signalbearbeitung zur Verfügung, ohne dass weitere Hardware-Decoder erforderlich sind.

Vorteilhaft sendet der erste Datenmanager 17 im Gerätecontroller 211 den Videoinhalt des Videodatenstroms bei fehlender Verfügbarkeit eines Hardware-Decoders über die Steuerdatenverbindung 14 zu den Software-Decodiermittel des Mediaplayers 214.

Auf diese Weise wird jeweils auch zur Mehrbildwiedergabe jeweils nur ein MPEG 2- und ein MPEG 4-Decoder benötigt.

Da das benutzte Netzwerkmodul für die Internetfunktion einen eigenen Mikro-Computer CPU aufweist, sind die Decodiermittel des Mediaplayers 214 als Software, die auch nachträglich von einem Serverdienst heruntergeladen und installiert werden können, ausgeführt.

Somit können wesentliche Hardware-Ressourcen trotz einer Vielfalt von Video- und Bildwiedergabemöglichkeiten eingespart werden.

Das DVB-Modul 300 und das Netzwerkmodul 310 sind vorteilhaft über eine Videodatenverbindung 16 miteinander verbunden, die mindestens einen Steuer- und zwei Datenkanäle für den Hin- und Rückweg des Videodatenstroms transportiert.

Nach einer besonders vorteilhaften Ausführung der Erfindung ist die Steuerdatenverbindung 14 eine USB-Verbindung und die digitale Videodatenverbindung 16 eine digitale Schnittstelle nach einer High Definition Multimedia Interface Spezifikation zum digitalen Übertragen von Audio- und Video-Daten, eine sogenannte ,HDMI'-Verbindung.

Vorteilhaft ist die Steuerdatenverbindung 14 als eine USB-Verbindung ausgeführt. Dabei hat der Gerätecontroller 211 im DVB-Modul 300 die Funktion als Host-Computer und das Netzwerk-Modul 310 eine Funktion als peripheres Gerät. Sowohl der Gerätecontroller 211 als auch der Modulcontroller 312 benutzen zum Übertragen von Steuerdaten und Videodatenströmen verschieden adressierbare Endpunkte. Für die Videodatenübertragung im Datenmultiplex ist der Videodatenkanal in der USB-Verbindung als gesonderter USB-Out-Endpunkt als Bulk-Endpunkt konfiguriert.

Der Datenmanager 17 im Geräte-Controller 211 nutzt vorteilhaft den oben beschriebenen Bulk-Transfer-Modus zum Übertragen von Steuerdaten vom DVB-Modul 300 zum Netzwerk-Modul 310 bzw. einen Interrupt-Transfer-Modus zum Übertragen von Steuerdaten vom Netzwerk-Modul zum DVB-Modul und den Bulk-Transfer-Modus zum Übertragen des Videotransportstroms zum Mediaplayer 214 im Netzwerk-Modul 310.

Das Konfigurieren von BULK-Endpunkten im Geräte-Controller 211 und im Netzwerkmodul 310 schafft ausreichende Bandbreite für Datenübertragung des Videodatenstroms und liefert eine Fehlerkorrektur bei Übertragungsfehlern.

In einer vorteilhaften Fortführung der Erfindung nutzt das DVB-Modul 300 die Video-Decodiermittel im Netzwerkmodul 310 auch, wenn der Videoprozessor 207 einen decodierten Videodatenstrom benötigt, um diesen in ein analoges Videosignal für einen analogen Videorecorder zu decodieren, welcher beispielsweise über eine SCART-Verbindung mit einem Videoausgang des Videoprozessors 207 verbunden ist und ein analoges Videoaufzeichnungssignal erhält.

Figur 4 zeigt eine weitere Ausführungsform der erfindungsgemäßen Bildverarbeitungseinrichtung.

Über die USB-Verbindung zwischen DVB-Modul 300 und Netzwerkmodul 310 werden auf einer USB-Verbindung zwei logische Kanäle realisiert: ein Kontrollkanal zum Austausch von Kontroll-Befehlen und ein Datenkanal zur Übertragung von Nutzdaten.

Der Datenmanager 17 ist mit dem Datenmanager 18 für die Videodatenübertragung verbunden. Dabei wird der oben beschriebene Bulk-Transfer-Modus vom DVB-Modul 300 zum Netzwerkmodul 310 verwendet.

Weiterhin ist der Datenmanager 17 mit dem Modulcontroller 312 für die Übertragung der Steuerdaten 13 verbunden. Dabei wird der Interrupt-Transfer-Modus zum Übertragen vom Netzwerkmodul 310 zum DVB-Modul 300 und der Bulk-Transfer-Modus zum Übertragen vom DVB-Modul 300 zum Netzwerkmodul 310 verwendet.

Der erste Datenmanager 17 initiiert den Transfer der Video-Daten Video-DS über die Steuerdatenverbindung 14 und bewirkt über einen USB-Kontrollbefehl, dass der Mediaplayer 214 gestartet wird. Dabei bewirkt der erste Datenmanager 17 den Transfer über die Steuerdatenverbindung 14.

Der Mediaplayer 214 meldet dem zweiten Datenmanager 18, dass er Daten zum Decodieren abrufen möchte. Dieser nimmt dann die Daten vom ersten Datenmanager 17 entgegen. Dabei liest der zweite Datenmanager 18 permanent Video-Daten Video-DS über die Datenverbindung 14 vom ersten und speichert diese zwischen, sodass der Mediaplayer 214 die Daten abrufen kann, wenn er bereit ist, sie zu verarbeiten.

Wenn der Mediaplayer 214 die Video-Daten Video-DS decodiert hat, werden sie als Bildschirminhalt des Netzwerkmoduls per HDMI-Schnittstelle an die Videomischeinrichtung 10 im DVB-Modul ausgegeben.

Vorteilhaft wird der Mediaplayer 214 für die Verarbeitung von Multimedia-Datenströmen verwendet. Dabei kommen Decodiermittel zum Decodieren der Video- bzw. Audiodaten zum Einsatz. Diese umfassen sowohl Software- als auch Hardware-Decoder.

## Patentansprüche

1. Hybrid-TV-Empfänger zur Wiedergabe von Mediendaten mit Medieninhalten verschiedener digitaler Medienquellen mittels eines Wiedergabegerätes (8),
die Mediendaten als ein codierter Videodatenstrom bereitgestellt sind,
der Hybrid-TV-Empfänger aufweisend:
• ein DVB-Modul (200/300) und ein Netzwerkmodul (210/310),
• das DVB-Modul (200/300) aufweisend
• mindestens einen ersten Eingang zum Bezug von ersten Mediendaten mit Medieninhalt aus einer ersten Medienquelle der verschiedenen digitalen Medienquellen,
• einen Hardware-Videodecoder zum Decodieren gemäß MPEG-2 und MPEG-4 der ersten Mediendaten in erste Videodaten,
• einen Videoprozessor (207) zum Verarbeiten der ersten Videodaten sowie Bereitstellen von ausgehenden Videodaten, die an ein Videodatenformat und eine Videobildauflösung eines Wiedergabegerätes (8) angepasst sind, und
• ein Video-Ausgang (7) zum Anschließen eines Wiedergabegerätes (8) und Bereitstellen der ausgehenden Videodaten;
• das Netzwerkmodul (210/310) mit einer Interneteinheit (213),
• die über einen Netzzugang (216) vierte Mediendaten mit audio-visuellen Medieninhalt aus einer vierten Medienquelle der verschiedenen digitalen Medienquellen beschafft,
• mit Software-Decodiermitteln und mittels einer CPU die vierten Mediendaten in vierte Videodaten decodiert und
• die vierten Videodaten dem Videoprozessor (207) bereitstellt;
**dadurch gekennzeichnet, dass**
• das Netzwerkmodul (210/310) einen Mediaplayer (214), der das Software-Decodiermittel umfasst, sowie eine Software-Codec-Bank (215) mit mindestens einem Video-Codec zum Decodieren von Video- und/oder Bilddaten aufweist,
• die Interneteinheit (213) unter der Kontrolle des Gerätecontrollers (211) und eines Modulcontrollers (212/312) die vierte Mediendaten beschafft,
• das DVB-Modul (200/300) ferner einen zweiten Eingang zum Bezug von zweiten Mediendaten mit Medieninhalt aus einer zweiten Medienquelle und einen dritten Eingang zum Bezug von dritten Mediendaten mit Medieninhalt aus einer dritten Medienquelle der verschiedenen digitalen Medienquellen aufweist,
• das DVB-Modul (200/300) mit dem Netzwerkmodul (210/310) indem gekoppelt ist, dass der Hybrid-TV-Empfänger eine Videodatenverbindung (16) zum Übertragen von Videodaten an Videoprozessor (207) aufweist sowie eine Steuerdatenverbindung (14) aufweist, die zwischen einem ersten Datenmanager (17) im DVB-Modul (200/300) und einem zweiten Datenmanager (18) im Netzwerkmodul (210/310) Steuerdaten eines Gerätecontrollers (211) überträgt, welche Nutzereingaben in ein DVB-modulseitiges Fernbediensystem (12) zum Steuern des Netzwerkmoduls (210/310) enthalten,
• das DVB-Modul (200/300) ferner aufweisend eine Video-Datencontroller-Software (307), die
• ermittelt, ob sich die ersten, die zweiten oder die dritten Mediendaten mittels des Hardware-Videodecoder decodieren lassen,
• und wenn nicht,
• dem Software-Decodiermittel mittels der Steuerdatenverbindung (14) die ersten, zweiten oder dritten Eingangsdaten bereitstellt, die das Software-Decodiermittel in erste, zweite oder dritte Videodaten decodiert und dem Videoprozessor (207) mittels der Videodatenverbindung (16) bereitstellt,
• der Hardware-Videodecoder und der Software-Decodiermittel mindestens zwei der decodierten Videodaten, nämlich die ersten, zweiten, dritten und vierten Videodaten, zeitgleich dem Videoprozessor (207) bereitstellen,
• der Videoprozessor (207) eine Videomischeinrichtung (10) sowie mehrere Videoeingänge für die decodierten Videodaten aufweist,
• der Videoprozessor (207) mittels der Videomischeinrichtung (10) ausgehende Videodaten bereitstellt, die die mindestens zwei der decodierten Videodaten zeitgleich enthalten.

2. Hybrid-TV-Empfänger nach Anspruch1, bei dem der erste Datenmanager (17) einen zur Mehrbildwiedergabe benötigten, weitere Mediendaten in einem Datenmultiplex über die Steuerdatenverbindung (14) gemeinsam mit Steuerdaten des Gerätecontrollers (211) zu dem zweiten Datenmanager (18) sendet, um die weiteren Mediendaten mit den Software-Decodiermitteln des Mediaplayers (214) zu decodieren.

3. Hybrid-TV-Empfänger nach Anspruch 1, bei dem der netzmodulseitige Modulcontroller (312) eine Unterroutine zum Erfassen und Verwalten der Software-Decodiermittel in der Software-Codec-Bank (215) aufweist, welche in der Lage ist, fehlende Software-Codecs zu identifizieren und über den Netzzugang (216) von einem Server über einen Datendownload zu beschaffen.

4. Hybrid-TV-Empfänger nach Anspruch 1, bei dem der erste Datenmanager (17) so konfiguriert ist, dass dieser einen kodierten Videodatenstrom in einem Datenmultiplex aus Steuer- und Videodaten wandelt und über die Steuerdatenverbindung (14) zum zweiten Datenmanager (18) überträgt.

5. Hybrid-TV-Empfänger nach Anspruch 1, bei dem die Steuerdatenverbindung (14) eine USB-Verbindung ist, wobei der Gerätecontroller (211) im DVB-Modul (300) eine Funktion als Host-Computer, das Netzwerk-Modul (310) eine Funktion als peripheres Gerät ausführt und sowohl der Gerätecontroller (211) als auch der Modulcontroller (312) zum Übertragen von Steuerdaten und Videodatenströmen verschieden adressierbare Endpunkte aufweisen.

6. Hybrid-TV-Empfänger nach Anspruch 1, bei dem die digitale Videodatenverbindung (16) eine digitale Schnittstelle nach einer High Definition Multimedia Interface Spezifikation zum digitalen Übertragen von Audio- und Video-Daten, eine sogenannte HDMI-Verbindung, ist.

7. Hybrid-TV-Empfänger nach Anspruch 5, bei dem der erste Datenmanager (17) vorteilhaft einen Bulk-Transfer-Modus zum Übertragen von Steuerdaten vom DVB-Modul (300) zum Netzwerk-Modul (310) bzw, einen Interrupt-Transfer-Modus zum Übertragen von Steuerdaten vom Netzwerk-Modul (310) zum DVB-Modul (300) und einen Bulk-Transfer-Modus zum Übertragen des Videotransportstroms zum Mediaplayer (214) im Netzwerk-Modul (310) nutzt.

8. Hybrid-TV-Empfänger nach Anspruch 1, bei dem das DVB-Modul (300) die Software-Decodiermittel im Netzwerkmodul (310) auch nutzt, wenn der Video-Prozessor (207) einen decodierten Videodatenstrom benötigt, um diesen in ein analoges Videosignal für einen analogen Videorecorder zu decodieren.

## Claims

1. Hybrid TV receiver for reproducing media data with media contents from various digital media sources by means of a playback device (8),
the media data being provided as an encoded video data stream,
the hybrid TV receiver comprising:
• a DVB module (200/300) and a network module (210/310),
• the DVB module (200/300) comprising:
• at least a first input for acquiring first media data with media content from a first media source of the various digital media sources,
• a hardware video decoder for decoding the first media data into first video data according to MPEG-2 and MPEG-4,
• a video processor (207) for processing the first video data and for providing outgoing video data which are adapted to a video data format and a video image resolution of a playback device (8), and
• a video output (7) for connecting a playback device (8) and for providing the outgoing video data,
• the network module (210/310) having an Internet unit (213),
• obtaining fourth media data with audiovisual media content from a fourth media source of the various digital media sources via a network access (216),
• decoding the fourth media data into fourth video data using software decoding means and by means of a CPU, and
• providing the fourth video data to the video processor (207),
**characterized in that**
• the network module (210/310) comprises a media player (214) which includes the software decoding means, and a software codec bank (215) with at least one video codec for decoding video and/or image data,
• the Internet unit (213) acquires the fourth media data under the control of the device controller (211) and a module controller (212/ 312),
• the DVB module (200/300) further comprises a second input for acquiring second media data with media content from a second media source and a third input for acquiring third media data with media content from a third media source of the various digital media sources,
• the DVB module (200/300) is coupled to the network module (210/310) **in that** the hybrid TV receiver comprises a video data connection (16) for transmitting video data to the video processor (207) and comprises a control data connection (14) which transmits control data of a device controller (211) between a first data manager (17) in the DVB module (200/300) and a second data manager (18) in the network module (210/310), which include user inputs in a DVB module side remote control system (12) for controlling the network module (210/310),
• the DVB module (200/300) further comprising a video data controller software (307) which
• determines whether the first, the second or the third media data can be decoded by means of the hardware video decoder,
• and if this is not the case,
• provides the software decoding means with the first, second or third input data by means of the control data connection (14), which the software decoding means decodes into first, second or third video data and provides to the video processor (207) by means of the video data connection (16),
• the hardware video decoder and the software decoding means provide at least two of the decoded video data, namely the first, second, third, and fourth video data simultaneously to the video processor (207),
• the video processor (207) comprises a video mixing device (10) and several video inputs for the decoded video data,
• the video processor (207) provides outgoing video data by means of the video mixing unit (10), which simultaneously include the at least two of the decoded video data.

2. Hybrid TV receiver according to claim 1, wherein the first data manager (17) sends further media data required for the multi-image reproduction in a data multiplex by the control data connection (14) to the second data manager (18) together with control data of the device controller (211), in order to decode the further media data using the software decoding means of the media player (214).

3. Hybrid TV receiver according to claim 1, wherein the network module side module controller (312) comprises a subroutine for capturing and managing the software decoding means in the software codec bank (215), which is capable of identifying missing software codecs and to provide them via the network access (216) by a data download from a server.

4. Hybrid TV receiver according to claim 1, wherein the first data manager (17) is configured in a way to convert an encoded video data stream in a data multiplex of control and video data and transmit the same to the second data manager (18) by the control data connection (14).

5. Hybrid TV receiver according to claim 1, wherein the control data connection (14) is a USB connection, wherein the device controller (211) performs a function as a host computer in the DVB module (300), the network module (310) performs a function as a peripheral device, and both the device controller (211) and the module controller (312) comprise differently addressable endpoints for transmitting control data and video data streams.

6. Hybrid TV receiver according to claim 1, wherein the digital video data connection (16) is a digital interface according to a high definition multimedia interface specification for the digital transmission of audio and video data, a so-called HDMI connection.

7. Hybrid TV receiver according to claim 5, wherein the first data manager (17) advantageously uses a bulk transfer mode for transmitting control data from the DVB module (300) to the network module (310) and, respectively, an interrupt transfer mode for transmitting control data from the network module (310) to the DVB module (300) and a bulk transfer mode for transmitting the video transport stream to the media player (214) in the network module (310).

8. Hybrid TV receiver according to claim 1, wherein the DVB module (300) also uses the software decoding means in the network module (310), if the video processor (207) requires a decoded video data stream, to decode it into an analogue video signal for an analogue video recorder.

## Revendications

1. Récepteur TV hybride pour la reproduction de données média avec des contenus médiatiques de différentes sources de médias numériques moyennant un dispositif de reproduction (8),
les données média étant prévues comme un flux de données vidéo encodé,
le récepteur TV hybride comportant :
• un module DVB (200/300) et un module de réseau (210/310) ;
• le module DVB (200/300) comportant :
• au moins une première entrée pour acquérir des premières données média avec un contenu médiatique d'une première source de médias parmi les différentes sources de médias numériques,
• un décodeur matériel vidéo pour décoder les premières données média en premières données vidéo selon MPEG-2 et MPEG-4,
• un processeur vidéo (207) pour traiter les premières données vidéo et pour fournir des données vidéo sortantes qui sont adaptées à un format de données vidéo et une résolution d'images vidéo d'un dispositif de reproduction (8), et
• une sortie vidéo (7) pour connecter un dispositif de reproduction (8) et fournir les données vidéo sortantes ;
• le module de réseau (210/310) avec une unité Internet (213),
• qui, par un accès réseau (216), obtient des quatrièmes données média avec un contenu audiovisuel d'une quatrième source de médias parmi les différentes sources de médias numériques,
• décode les quatrièmes données média en quatrièmes données vidéo avec des moyens logiciels de décodage et moyennant une CPU, et
• fournit les quatrièmes données vidéo au processeur vidéo (207) ;
**caractérisé en ce que**
• le module de réseau (210/310) comporte un lecteur multimédia (214) comprenant le moyen logiciel de décodage, ainsi qu'une banque de logiciel de codec (215) ayant au moins un codec vidéo pour décoder des données vidéo et/ou des données d'image,
• l'unité Internet (213) acquiert les quatrièmes données média sous le contrôleur des appareils (211) et un contrôleur de modules (212/312),
• le module DVB (200/300) comporte en outre une deuxième entrée pour acquérir des deuxièmes données média avec un contenu médiatique d'une deuxième source de médias et une troisième entrée pour acquérir des troisièmes données média avec un contenu médiatique d'une troisième source de médias parmi les différentes sources de médias numériques,
• le module DVB (200/300) est connecté au module de réseau (210/310) **en ce que** le récepteur TV hybride comprend une connexion de données vidéo (16) pour transmettre des données vidéo au processeur vidéo (207) et comprend une connexion de données de contrôle (14) qui transmet des données de contrôle d'un contrôleur des appareils (211) entre un premier gestionnaire de données (17) dans le module DVB (200/300) et un deuxième gestionnaire de données (18) dans le module de réseau (210/213), contenant des entrées d'utilisateurs dans un système de télécommande côté module DVB (12) pour contrôler le module de réseau (210/310),
• le module DVB (200/300) comportant en outre un logiciel de contrôle de données vidéo (307), qui
• détermine, si les premières, les deuxièmes ou les troisièmes données média peuvent être décodées moyennant le décodeur matériel vidéo,
• et si ce n'est pas le cas,
• fournit au moyen logiciel de décodage moyennant la connexion de données de contrôle (14) les premières, deuxièmes ou troisièmes données d'entrée, que le moyen logiciel de décodage décode en premières, deuxièmes ou troisièmes données vidéo et fournit au processeur vidéo (207) moyennant la connexion de données vidéo (16),
• le décodeur matériel vidéo et le moyen logiciel de décodage fournissent au moins deux des données vidéo décodées, à savoir les premières, deuxièmes, troisièmes ou quatrièmes données vidéo au processeur vidéo (207) en même temps,
• le processeur vidéo (207) comprend un dispositif de mélange vidéo (10) ainsi que plusieurs entrées vidéo pour les données vidéo décodées,
• le processeur vidéo (207) fournit des données vidéo sortantes moyennant le dispositif de mélange vidéo, contenant en même temps les au moins deux parmi les données vidéo décodées.

2. Récepteur TV hybride selon la revendication 1, dans lequel le premier gestionnaire de données (17) transmet d'autres données média nécessaires pour la reproduction multi-images dans un multiplex de données par la connexion de données de contrôle (14) avec les données de contrôle du contrôleur des appareils (211) au deuxième gestionnaire de données (18), de manière à décoder les autres données média avec les moyens logiciels de décodage du lecteur multimédia (214) .

3. Récepteur TV hybride selon la revendication 1, dans lequel le contrôleur des modules côté module de réseau (312) comporte une sous-routine pour saisir et gérer les moyens logiciels de décodage dans la banque de logiciel de codec (215), qui est capable d'identifier des codecs de logiciel manquants et de les obtenir par un téléchargement de données par un accès réseau (216) d'un serveur.

4. Récepteur TV hybride selon la revendication 1, dans lequel le premier gestionnaire de données (17) est configuré de manière à convertir un flux de données vidéo encodé dans un multiplex de données de données vidéo et de données de contrôle et à les transmettre au deuxième gestionnaire de données (18) par la connexion de données de contrôle (14).

5. Récepteur TV hybride selon la revendication 1, dans lequel la connexion de données de contrôle (14) est une connexion USB, le contrôle des appareils (211) exécutant une fonction d'ordinateur hôte dans le module DVB (300), le module de réseau (310) exécutant une fonction d'appareil périphérique et le contrôleur des appareils (211) et le contrôleur des modules (312) comportant des points terminaux adressables de manière différente pour la transmission de données de contrôle et de flux de données vidéo.

6. Récepteur TV hybride selon la revendication 1, dans lequel la connexion de données vidéo numérique (16) est une interface numérique selon une spécification Interface Multimédia Haute Définition pour la transmission numérique de données audio et vidéo, une connexion dite HDMI.

7. Récepteur TV hybride selon la revendication 5, dans lequel le premier gestionnaire de données (17) utilise de manière avantageuse un mode de transfert en bloc pour la transmission de données de contrôle du module DVB (300) au module de réseau (310) ou, respectivement, un mode de transfert d'interruption pour la transmission de données de contrôle du module de réseau (310) au module DVB (300) et un mode de transfert en bloc pour la transmission du flux de transport vidéo au lecteur multimédia (214) dans le module de réseau (310).

8. Récepteur TV hybride selon la revendication 1, dans lequel le module DVB (300) également utilise les moyens logiciels de décodage dans le module de réseau (310), lorsque le processeur vidéo (207) a besoin d'un flux de données vidéo décodé pour le décoder en un signal vidéo analogue pour un lecteur vidéo analogue.
